Europäisches Patentamt

European Patent Office

Office européen des brevets

(19)

(11) Numéro de publication: **0 009 443**
**B1**

## FASCICULE DE BREVET EUROPEEN

(12)

(45) Date de publication du fascicule du brevet.
15.06.83

(21) Numéro de dépôt: 79400641.1

(22) Date de dépôt: 13.09.79

(51) Int. Cl.³: **G 05 D  13/62**, B 60 K  31/00 //
G01P1/10

(54) Discriminateur numérique de vitesse angulaire et commande de moteur comportant un tel dispositif.

(30) Priorité: 15.09.78  FR 7826555

(43) Date de publication de la demande:
02.04.80 Bulletin 80/7

(45) Mention de la délivrance du brevet:
15.06.83 Bulletin 83/24

(84) Etats contractants désignés:
DE GB IT SE

(56) Documents cités:
**FR-A-1 453 454**
**FR-A-2 295 617**
**US-A-3 543 116**
**IBM TECHNICAL DISCLOSURE BULLETIN vol. 9,
no. 10, mars 1967, New York US, C.D. CARMAN et
al.: »Digital Speed Control System«, pages
1315—1317**

(73) Titulaire: **PSA ETUDES ET RECHERCHES, 75, Avenue de
la Grande Armée, F-75016 Paris (FR)**

(72) Inventeur: **Menard, Christian, ″THOMSON-CSF″ -
SCPI 173, bld Haussmann, F-75360 Paris Cedex 08 (FR)**
Inventeur: **Machetel, Roger, ″THOMSON-CSF″ -
SCPI 173, bld Haussmann, F-75360 Paris Cedex 08 (FR)**

(74) Mandataire: **Letellier, Bernard et al, THOMSON-CSF
SCPI 173, Bld Haussmann, F-75379 Paris Cedex 08 (FR)**

## Discriminateur numérique de vitesse angulaire et commande de moteur comportant un tel dispositif

L'invention se rapporte au domaine technique de la commande des machines tournantes; elle concerne, plus précisément, un dispositif électronique permettant, notamment, de détecter si la vitesse de rotation d'un moteur est située en deça ou au-delà d'une vitesse de rotation déterminée: en ce sens, un dispositif selon l'invention constitue un discriminateur de vitesse angulaire.

Dans le domaine technique de la commande des machines tournantes, notamment de la commande des moteurs de traction pour véhicule automobile, il se pose fréquemment le problème de déterminer si la vitesse de rotation, ou régime de rotation d'un moteur, est supérieure ou inférieure à une vitesse de rotation donnée, ou vitesse angulaire de référence, ceci, généralement, dans le but de modifier les conditions de fonctionnement du moteur, en fonction de son régime de rotation effectif.

Pour déterminer si la vitesse de rotation N d'un moteur est supérieure ou inférieure à une vitesse de rotation $N_0$ déterminée, on doit, d'abord, mesurer la vitesse de rotation, moyennée sur une période de temps définie, puis, comparer la valeur mesurée à une valeur déterminée correspondant à la vitesse angulaire de référence $N_0$, ou encore vitesse angulaire de transition entre les régimes de vitesse supérieur et inférieur. Cette vitesse angulaire de transition peut être une grandeur fixe; elle peut être, aussi, une grandeur variable fonction de la valeur de certains paramètres physiques mesurés qui sont représentatifs des conditions effectives de fonctionnement du moteur, par exemple: la température, la charge du moteur, etc. . . Dans le but de satisfaire aux conditions de stabilité des systèmes asservis ou commandés, il est souvent nécessaire, au niveau du dispositif discriminateur de la vitesse de rotation du moteur, d'introduire un jeu, ou plus précisément un effet d'hystérésis, de manière à parfaitement délimiter les domaines des régimes supérieur et inférieur de rotation du moteur. Dans certaines applications, il est souhaitable de modifier la largeur du cycle d'hystérésis.

Dans l'industrie automobile, la performance de fiabilité des dispositifs électroniques destinés au groupe de propulsion du véhicule, doit être obtenue à un coût raisonnable. On comprendra alors les difficultés qu'il est nécessaire de surmonter quand on aura rappelé que ces dispositifs électroniques, destinés à équiper les véhicules automobiles, doivent pouvoir opérer pendant une durée effective de fonctionnement supérieur à 2000 heures et, ceci, en l'absence d'opérations de maintenance préventive, dans un environnement hostile, caractérisé par: de larges variations de température, des niveaux de vibrations élevés; de plus, ces dispositifs électroniques doivent pouvoir fonctionner à partir d'une source primaire d'energie électrique, constituée par une batterie chimique, dont la tension de sortie fluctue dans des limites étendues.

Des dispositifs permettant de discriminer les régimes de rotation d'un moteur sont connus dans la technique de l'électronique automobile. On a déjà proposé un dispositif électronique du type analogique.

On connaît également, notamment par la demande de brevet FR-A-2 295 617, un discriminateur numérique de vitesse angulaire et son application à la commande de la vitesse de rotation d'un moteur électrique. Selon cet art antérieur, le discriminateur est constitué par un compteur binaire incrémenté par une source de signal d'horloge à fréquence fixe et restauré périodiquement par le signal de sortie d'un capteur de la vitesse de rotation du moteur à commander; la sortie de ce compteur binaire est reliée à un circuit décodeur programmable dont la sortie est échantillonnée par une bascule bistable qui enregistre périodiquement le fait que la valeur programmée du décodeur a été atteinte.

Ce discriminateur de l'art antérieur présente une caractéristique de sortie sans hystérésis du type »tout ou rien«, ce qui a pour inconvénient, si l'on veut éviter des phénomènes d'instabilité de la commande, la nécessité d'incorporer, entre la sortie de ce discriminateur et l'entrée de commande du moteur, un circuit intégrateur, comme décrit dans le document précité.

La présente invention a pour but de fournir un discriminateur numérique de vitesse angulaire dont la caractéristique de sortie autorise un couplage direct de ce discriminateur à l'élément à commander, et permet de satisfaire aux conditions de précision et de stabilité de la commande.

Ce but est atteint par un dispositif numérique, ou discriminateur qui fournit, sur sa sortie, un signal de mesure permettant, avec un effet d'hystérésis, d'indiquer si la vitesse de rotation N d'un moteur se situe au-dessus ou en-dessous d'une vitesse de rotation $N_0$ déterminée. Le discriminateur reçoit, sur son entrée, un signal d'entrée $S_i$ formé par des impulsions dont la période T est inversement proportionnelle à la vitesse de rotation du moteur N dont on veut discriminer le régime de rotation. Les grandeurs T et N étant reliées par la relation:

$$T = K/N$$

où K est un nombre entier égal ou supérieur à l'unité, ou, un nombre fractionnaire.

Le discriminateur délivre un signal de sortie S à 2 états:

— un premier état $S_2$, lorsque la vitesse de rotation du moteur croît, au-delà d'une valeur $N_2$, et

— un second état $S_1$, lorsque la vitesse de rotation du moteur décroît en decà d'une valeur $N_1$, avec

$$N_1 < N_0 < N_2$$

et,

$$\frac{N_2 - N_1}{2 N_0} = k,$$

le coefficient d'hystérésis du discriminateur.

Le discriminateur comprend:

— des moyens de mesure numériques permettant de détecter si la période T des impulsions électriques qui constituent le signal d'entrée est supérieure á une première valeur $T_2 = K/N_2$ et consécutivement si cette période T est supérieure à une seconde valeur $T_1 = K/N_1$; ces moyens étant constitués: par un compteur binaire, incrémenté par un signal d'horloge interne de période $T_c$ et remis cycliquement à zéro par chacune des impulsions d'entrée, et, par deux reconnaisseurs: un premier reconnaisseur qui reconnaît si l'état de comptage a atteint une première valeur $M_2$ telle que $M_2 T_c = T_2$ et un second reconnaisseur qui reconnaît si l'état de comptage a atteint une seconde valeur $M_1$, telle que $M_1 T_c = T_1$; les valeurs $M_1$ et $M_2$ doivent satisfaire à la relation

$$M_2 < M_1 < M_0$$

où $M_0$ est égal à $2^n$, si n est le nombre d'étages du compteur;
— deux moyens de mémorisation connectés aux sorties des deux reconnaisseurs précédents et interconnectés entre eux de façon logique: un premier moyen, constitué par une bascule bistable du type RS, l'entrée S de cette bascule étant connectée à la sortie du premier reconnaisseur et l'entrée R de cette bascule recevant les impulsions d'entrée $S_i$, et un second moyen constitué par une bascule bistable du type RS, l'entrée S de cette bascule étant connectée à la sortie du second reconnaisseur et l'entrée R étant connectée à la sortie d'une porte logique de type »ET«; cette porte logique reçoit: sur une première entrée, les signaux d'entrée en impulsions $S_i$ et, sur une seconde entrée, le signal de sortie complémenté de la première bascule; la sortie de la seconde bascule constitue le signal de sortie S du dispositif.

Ainsi apparaissent immédiatement plusieurs avantages du dispositif conforme à l'invention; un premier avantage résulte de l'absence de dérive du dispositif, un second avantage est la possibilité d'indiquer le régime de rotation du moteur entre le temps séparant deux impulsions d'entrée consécutives, enfin, un avantage technologique puisque le dispositif peut être fabriqué uniquement par l'association de portes logiques.

L'invention a également pour objet un dispositif discriminateur dont la valeur de la vitesse angulaire de référence $N_0$ peut être modifiée, manuellement ou automatiquement, par un signal de commande externe; pour ce faire, le circuit d'horloge qui fournit le signal de période $T_c$ comporte des moyens permettant de modifier cette période $T_c$ et, par voie de conséquence, les valeurs:

$$T_1 = M_1 T_c = \frac{K}{N_1} \text{ et } T_2 = M_2 T_c = \frac{K}{N_2}$$

si l'on considère que:

$$N_0 = \frac{N_1 + N_2}{2}$$

Un autre objet de l'invention est un discriminateur de vitesse angulaire dont on peut modifier séparément les paramètres $M_1$ et $M_2$ et, par voie de conséquence, les termes $T_1$ et $T_2$, donc, $N_1$ et $N_2$; pour ce faire, on modifie les liaisons entre les sorties des étages du compteur binaire et les entrées des reconnaisseurs. On peut, différemment, utiliser des reconnaisseurs programmables électroniquement. Ces dispositifs reconnaisseurs sont aussi connus sous la dénomination de décodeurs numériques.

D'autres caractéristiques et avantages procurés par l'invention apparaîtront dans la description qui va suivre, faite en regard des dessins annexés, qui donne à titre explicatif, mais nullement limitatif, un mode de réalisation de l'invention.

Sur ces dessins:

— la figure 1 représente, sous une forme graphique, la caractéristique de transfert, commune aux discriminateurs de vitesse angulaire dotés d'un effet d'hystérésis,
— la figure 2 représente, sous la forme de blocs fonctionnels, un discriminateur de vitesse angulaire de l'art antérieur de type analogique,
— la figure 3 représente, sous la forme de blocs fonctionnels, un mode de réalisation d'un discriminateur numérique de vitesse angulaire conforme à l'invention,
— la figure 4 représente, sous la forme de blocs fonctionnels, une variante de réalisation du dispositif de la figure 3, permettant de simplifier la construction des éléments qui constituent les reconnaisseurs de l'état de comptage du compteur binaire,
— la figure 5 représente, sous la forme de blocs fonctionnels, une variante de réalisation du dispositif de la figure 3, permettant d'éliminer un élément reconnaisseur de l'état de comptage du compteur binaire,
— la figure 6 représente un circuit logique permettant de réaliser le circuit d'horloge,
- la figure 7 représente, sous la forme de blocs fonctionnels, un circuit d'horloge dont la fréquence $F_c$ du signal de sortie peut être modifiée numériquement,
- la figure 8 représente, sous la forme de blocs fonctionnels, une application d'un discriminateur, selon l'invention, à un dispositif d'allumage électronique du type double canal,
- la figure 9 représente, sous la forme de blocs fonctionnels, une application d'un discriminateur, selon l'invention, à un dispositif permettant, dans un moteur, d'éviter les régimes de survitesse,
- la figure 10 représente, sous la forme de blocs fonctionnels, une application d'un discriminateur, selon l'invention, à un système de recirculation des gaz d'échappement dans un moteur DIESEL.

La description de l'invention qui va suivre est orientée vers des applications aux moteurs de traction pour véhicule automobile, toutefois, il faut comprendre qu'un dispositif selon l'invention est d'application générale, comme il sera décrit par la suite. Dans la technique des moteurs, il est d'usage courant de spécifier ou d'indiquer la vitesse de rotation d'un moteur par un nombre N exprimé en tours/minute, vitesse à laquelle correspond une période de révolution $T = 60/N$ secondes.

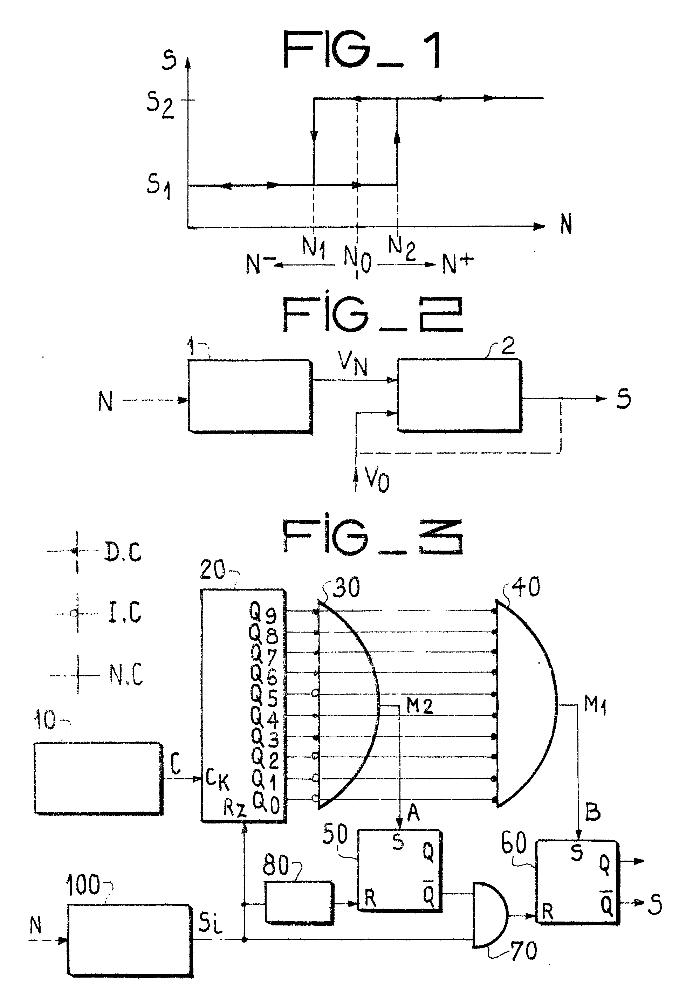

La figure 1 représente, sous une forme graphique, la caractéristique de transfert, commune aux discriminateurs de vitesse angulaire, dotés d'un effet d'hystérésis. Sur cette figure, la variable d'entrée, ou vitesse de rotation N du moteur, est protée en abcisse et la grandeur de sortie, ou signal de commande S est protée en ordonnée. La grandeur $N_0$ correspond à la vitesse angulaire de transition $N_0$ qui délimite, à gauche, le régime des vitesses de rotation $(N^-)$ inférieures et, à droite, le régime des vitesses de rotation $(N^+)$ supérieures. Les vitesses de rotation $N_1$ et $N_2$ délimitent le cycle d'hystérésis; la caractéristique de transfert d'un tel discriminateur est donnée par les relations suivantes:

d'une part, lorsque la vitesse de rotation N croît, le niveau du signal S bascule de l'état $S_1$ à l'état $S_2$ pour la valeur de $N = N_2$ et, d'autre part, lorsque la vitesse de rotation décroît, le niveau du signal S bascule de l'état $S_2$ à l'état $S_1$ pour la valeur de $N = N_1$. Au-delà de la vitesse $N_2$, le niveau du signal de sortie est $S_2$ et, en deça de la vitesse $N_1$ le niveau du signal de sortie est à l'état $S_1$. Le choix des niveaux $S_1$ et $S_2$ est purement arbitraire et la loi de variation de ces deux niveaux en fonction de la vitesse de rotation N du moteur est illustrée par les flèches. Le coefficient d'hystérésis k est donné par la relation:

$$k = \genfrac{}{}{0pt}{}{+}{-} \left( \frac{N_2 - N_1}{N_2 + N_1} \right)$$

La vitesse angulaire de transition $N_0$ est donnée par la relation

$$N_0 = \frac{N_1 + N_2}{2}$$

La figure 2 représente, sous une forme schématique, un discriminateur analogique de vitesse angulaire de l'art antérieur, ce discriminateur comprend:

- un moyen 1 qui reçoit, sur son entrée, la grandeur N ou vitesse de rotation du moteur, sous une forme mécanique ou électrique, ce moyen élabore un signal de sortie continu $V_N$ dont l'amplitude est proportionnelle à la vitesse de rotation N du moteur.
- un comparateur de tension 2 qui reçoit, sur une première entrée, le signal de sortie $V_N$ et, sur une seconde entrée, un signal de référence $V_0$ correspondant à la grandeur de la vitesse angulaire de référence $N_0$; ce comparateur de tension délivre un signal de sortie S à deux états: un premier état $V_S$ lorsque $V_N > V_0$ et un second état $\overline{V}_S$ lorsque $V_N < V_0$. Le comparateur de tension peut comporter une boucle de réaction positive, comme indiqué en pointillé sur la figure 2, dans le but d'obtenir une caractéristique de transfert similaire à celle représentée sur la figure 1. Par le choix du taux de réaction de la boucle, le coefficient d'hystérésis k peut être fixé dans certaines limites. Par le choix de la grandeur de référence $V_0$, la vitesse angulaire de référence $N_0$ peut être modifiée.

Divers modes de réalisation du moyen 1 de la figure 2 ont été proposés; selon un mode de réalisation, ce moyen 1 est constitué par une génératrice tachymétrique entraînée par un axe de sortie du moteur; selon une variante de réalisation, le moyen 1 est constitué par un générateur de signaux électriques qui délivre des impulsions synchrones de la rotation du moteur, ces impulsions sont appliquées à l'entrée d'un convertisseur fréquence/tension d'un type analogique ou, éventuellement, d'un type numérique.

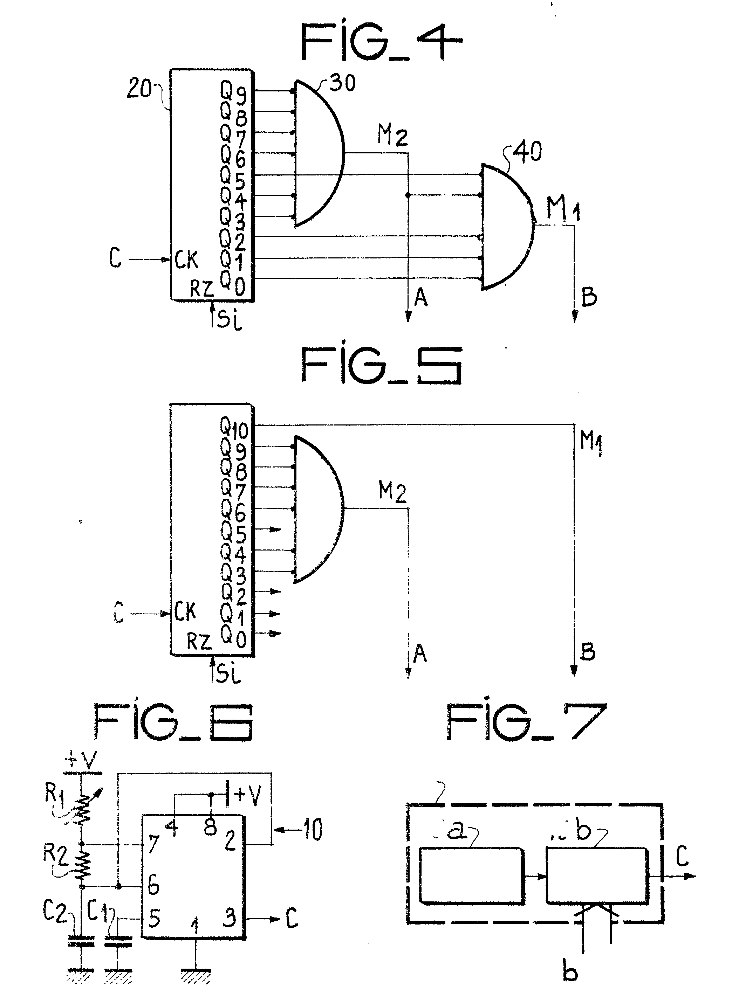

La figure 3 représente, sous une forme schématique, un mode de réalisation d'un discriminateur de vitesse angulaire conforme à l'invention; ce discriminateur comprend:

- un capteur 100 de mesure de la vitesse de rotation N du moteur; ce capteur délivre un signal de sortie $S_i$, formé d'impulsions positives, par exemple, de période $T = K/N$, c'est-à-dire synchrone de la rotation N du moteur;
- un compteur binaire 20, unidirectionnel modulo $M_0$, ce compteur étant constitué de n étages chaînés ($n = \log_2 M_0$) et il comporte: une entrée CK d'incrémentation, une entrée RZ de remise à zéro de son contenu et n

sorties identifiées $Q_0$ à $Q_{(n-1)}$ ($Q_0$ à sur la figure 3);

— un circuit d'horloge 10, constitué par un oscillateur libre, de fréquence $F_c$, ce circuit d'horloge 10 délivre sur sa sortie un signal C de période $T_c = 1/F_c$, ce signal est appliqué à l'entrée d'incrémentation CK du compteur 20;

— deux reconnaisseurs dont les entrées sont connectées aux sorties $Q_0$ à $Q_{(n-1)}$ du compteur 20: un premier reconnaisseur 30 reconnaît l'état $M_2 < M_1$ du compteur et délivre un signal de sortie A correspondant, un second reconnaisseur 40 reconnaît l'état $M_1 < M_0$ du compteur et délivre un signal de sortie B correspondant;

— deux bascules de mémorisation des signaux de sortie A et B des premier et second reconnaisseurs: une première bascule 50 du type RS, cette bascule comportant: une entrée S (positionnement) connectée à la sortie du reconnaisseur 30, une entrée R (remise à zéro) qui reçoit, à travers un circuit de retard 80, les impulsions du signal d'entrée $S_i$, et, deux sorties $Q$ et $\overline{Q}$; une seconde bascule 60 du type RS, cette bascule comportant une entrée S, connectée à la sortie du reconnaisseur 40, une entrée R connectée à la sortie d'une porte logique 70, et, deux sorties $Q$ et $\overline{Q}$;

— une porte logique 70 du type »ET«; cette porte comportant: une première entrée connectée à la sortie $\overline{Q}$ de la bascule 50 et une seconde entrée qui reçoit les impulsions du signal d'entrée $S_i$.

Le fonctionnement des éléments qui viennent d'être décrits est le suivant:

— le contenu du compteur 20 est continuellement incrémenté par les signaux C d'horloge, ce contenu est cycliquement remis à zéro pour chacune des impulsions du signal d'entrée $S_i$;

— les entrées des reconnaisseurs 30 et 40 sont connectées de manière à reconnaître, respectivement, les contenus $M_2$ et $M_1$ du compteur; sur les figures 3, 4 et 5, les termes D.C, I.C et N.C de la légende signifient respectivement: Connexion Directe, Connexion Inversée et Non Connectée;

— la bascule 50 est positionnée à l'état $Q = 1$ (niveau haut) chaque fois que le reconnaisseur 30 reconnaît un état $M_2$ du compteur et, est repositionné à l'état $Q = 0$ (niveau bas) pour chacune des impulsions du signal d'entrée $S_i$;

— la bascule 60 est positionnée à l'état $Q = 1$ chaque fois que le reconnaisseur 40 reconnaît un état $M_1$ du compteur et est repositionné à l'état $Q = 0$ chaque fois qu'une impulsion du signal d'entrée $S_i$ est transférée par la porte 70.

Le fonctionnement du discriminateur sera décrit en considérant un exemple numérique; on suppose que la vitesse angulaire de transition a pour valeur $N_0 = 1.500$ t/min., que le coefficient d'hystérésis a pour valeur $k = 2 \cdot 10^{-2}$ et que le coefficient K correspondant au nombre d'impulsions par révolution du moteur a une valeur égale à l'unité. Alors, on a $N_1 = N_0(1-k) = 1470$ t/min et $N_2 = N_0(1+k) = 1530$ t/min. La fréquence $F_c = 1/T_c$, du signal C, délivré par le circuit d'horloge, est donnée par la relation:

$$F_c = \frac{M_1 \cdot N_0(1-k)}{60} = \frac{M_2 \cdot N_0(1+k)}{60}$$

Il est possible de choisir, pour la valeur de $M_1 > M_2$, la valeur $M_1 = (2^n - 1)$ où n est le nombre d'étages du compteur binaire 20: ce nombre n est l'un des paramètres qui détermine la précision du dispositif, l'autre paramètre étant le coefficient de stabilité de la fréquence $F_c$ du signal d'horloge. Si l'on choisit pour la valeur de n le nombre 10, l'erreur de quantification du compteur est de l'ordre de $10^{-3}$ et, alors, $M_1$ a pour valeur 1023 unités. La grandeur de la fréquence $F_c$ du signal d'horloge est donnée par la relation suivante:

$$F_c = \frac{M_1 \cdot N_0(1-k)}{60} = 20.063 \; H_z$$

avec $M_1 = 1.023$, $N_0 = 1.500$ t/min et $k = 2.10^{-2}$

La valeur de $M_2$ se déduit de la relation suivante:

$$M_2 = M_1 \frac{(1-k)}{(1+k)} = 984$$

L'état 1023 du compteur binaire est reconnu en connectant toutes les entrées du reconnaisseur 40 aux sorties $Q_0$ à $Q_9$ correspondantes de ce compteur. L'état 984 du compteur binaire est reconnu en connectant les entrées du reconnaisseur 30 aux sorties $Q_0$ à $Q_9$, selon la suite (1111011000) comme représenté sur la figure 3.

La figure 4 représente, sous une forme schématique, une variante de réalisation du dispositif de la figure 3 permettant de simplifier la construction des reconnaisseurs 30 et 40 associés au compteur binaire 20. Suivant l'exemple précédent, selon lequel $M_2 = 984$ unités, c'est-à-dire en notation binaire (1111011000), si l'on ne prend pas en compte les entrées correspondant aux valeurs 0 (zéro), alors le nombre binaire (1111X11XXX) représente les valeurs décimales 984 à 991 et 1016 à 1023, lesquelles valeurs sont toujours supérieures au nombre $M_2 = 984$ et au maximum égales au nombre $M_1 = 1023$; cette considération permet de simplifier la construction du reconnaisseur 30.

La configuration du reconnaisseur 40 peut aussi être simplifiée et ne comporter que 5 entrées dont 1 entrée reliée à la sortie du reconnaisseur 30 et 4 entrées reliées aux sorties $Q_5$, $Q_2$ et $Q_1$ du compteur binaire.

D'après ce qui précède, on voit que, dans le but de minimiser le nombre des liaisons entre les sorties du compteur binaire et les entrées des reconnaisseurs, il est avantageux, d'une part, d'éliminer les liaisons correspondant à un état bas (zéro), entre le compteur binaire et le reconnaisseur 30, et, d'autre part, de prendre en compte la sortie du reconnaisseur 30 à l'entrée du reconnaisseur 40. D'une manière plus générale, on peut aussi choisir les valeurs des paramètres $M_1$ et $M_2$, de manière à minimiser le nombre des liaisons électriques.

La figure 5 représente, sous une forme schématique, une variante de réalisation d'un dispositif conforme à l'invention, permettant de simplifier le reconnaisseur 40 des figures 3 et 4. Selon cette variante de réalisation, le compteur binaire 20 comporte $(n+1)$ étages de comptage et leurs moyens de remise à zéro, les sorties de ces étages de comptage sont identifiées de $Q_0$ à $Q_n$ ($Q_0$ à $Q_{10}$ sur la figure 5). La sortie de l'étage de rang $Q_n$ qui indique le débordement des n étages précédents fournit le paramètre $M_1$, ainsi

$$2^n \leqslant M_1 < (2^{n+1} - 1)$$

La fréquence $F_c$ du signal d'horloge est donnée par la relation générale:

$$F_c = \frac{M_1 \cdot N_0 (1 - k)}{60} = \frac{M_1 N_1}{60}$$

et la valeur du paramètre $M_2$ découle de la formule:

$$M_2 = M_1 \frac{N_1}{N_2}$$

Les entrées du reconnaisseur 30 sont reliées aux sorties des étages du compteur binaire 20 comme indiqué précédemment. A titre d'exemple, si l'on considère les grandeurs numériques précédents:

$$N_0 = 1.500 \, t/min., \quad k = 2 \cdot 10^{-2} \, et \, n = 10$$

on obtient: $M_1 = 1.024$, $Fc = 20.088$ Hz et $M_2 \simeq 984$ comme décrit précédemment, uniquement les sorties $Q_3$, $Q_4$, $Q_6$ à $Q_9$ du compteur binaire 20 sont reliées aux entrées correspondantes du reconnaisseur 30.

Le dispositif qui vient d'être décrit peut être réalisé par l'association de composants électroniques standards du type SSI (intégré à faible échelle) ou MSI (intégré à moyenne échelle).

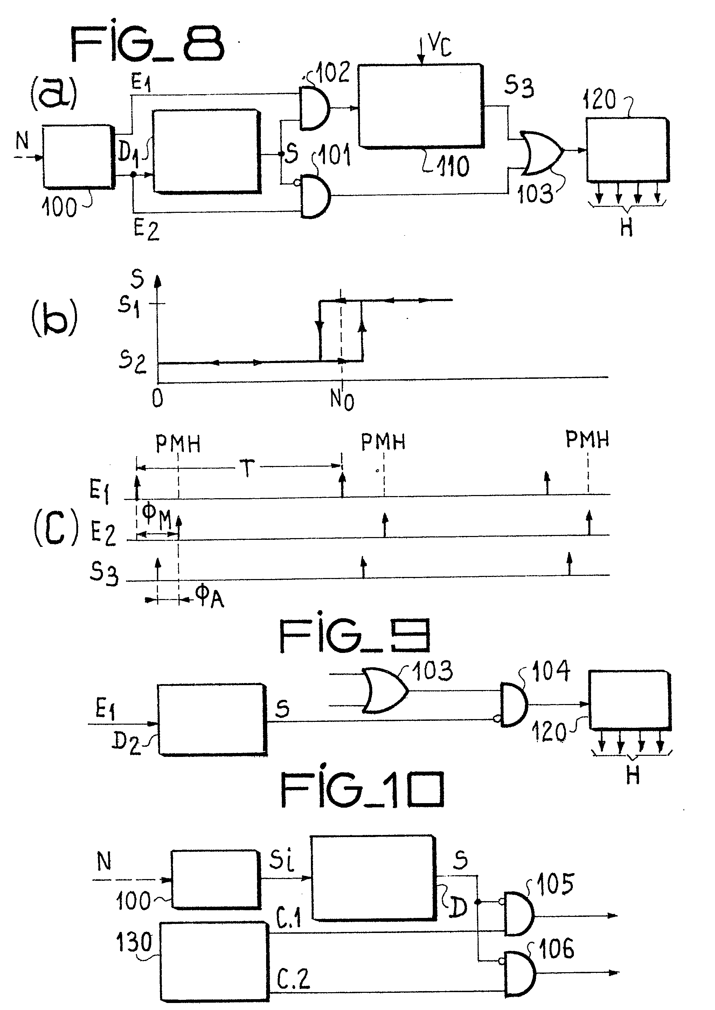

La figure 6 représente un circuit logique permettant de réaliser le circuit d'horloge 10. Le circuit d'horloge peut être réalisé par un boîtier standard 11 du type LM 555 ou MC 1555G; la fréquence $F_0$ du signal de sortie, C, est déterminée par les éléments $R_1$, $R_2$ et $C_2$; l'élément $C_1$ est une capacité de découplage.

Le compteur binaire 20 peut être constitué par un circuit intégré (I.C.) standard tel que le MC 14040 BCP (Motorola).

Les reconnaisseurs 30 et 40 peuvent être constitués par un circuit décodeur tel que le MC 14068 BCP (Motorola). Les bascules 50 et 60 peuvent être réalisées en interconnectant deux portes logiques du type »NON OU« comme connu en soi. L'élément 80, qui introduit un retard du signal d'entrée $S_i$, peut être constitué par un réseau passe-bas du type résistance/capacité.

Selon un mode de fabrication différent, les éléments du dispositif peuvent être intégrés sur une unique micro-pastille d'un substrat semiconducteur.

La figure 7 représente un mode de réalisation du circuit d'horloge 10 permettant de modifier numériquement la fréquence $F_c$ du signal C d'incrémentation du compteur binaire 20, dans le but de modifier la vitesse angulaire de référence $N_0$ du discriminateur; le circuit d'horloge comporte:

- un oscillateur 10a délivrant un signal de fréquence fixe $F_x$,
- un diviseur de fréquence 10b programmable constitué, par exemple, par un multiplicateur de fréquence discret qui permet de multiplier la fréquence $F_x$ du signal d'entrée par un facteur X compris entre zéro et l'unité, ce facteur étant disponible sous une forme numérique constituée par un mot de b bits.

Un multiplicateur de fréquence discret peut être constitué par un circuit connu sous la dénomination BRM (Binary Rate Multiplier) dans la littérature anglo-saxonne. Le facteur de multiplication X peut être fonction de la grandeur d'un paramètre physique tel que la température, la charge du moteur, etc...

D'autres moyens permettant de modifier la valeur de la fréquence $F_c$ du circuit d'horloge sont envisageables, par exemple, la résistance du réseau qui détermine la fréquence d'oscillation du circuit peut être constituée par une thermistance, ou, l'oscillateur peut être du type VCO (contrôlé électroniquement par tension) si le facteur X est disponible sous une forme analogique.

La figure 8a représente, sous une forme schématique, une application d'un discriminateur de vitesse angulaire, conforme à l'invention, à l'allumage d'un moteur à combustion interne. Le dispositif d'allumage, représenté sur la figure 8a est du type électronique double canal; il permet de déclencher un générateur d'étincelles destiné à provoquer l'allumage du mélange air/carburant injecté dans les cylindres du moteur.

Le discriminateur de vitesse angulaire est identifié par la référence $D_1$; il peut être réalisé selon l'une des figures 3 à 5; il fournit un signal de sortie S à deux états $S_1$ et $S_2$ et sa caractéristique de transfert en fonction de la vitesse de rotation N du moteur est représentée sur la figure 8b.

Un dispositif d'allumage électronique double canal comporte:

- un capteur 100, solidaire d'un axe de sortie du moteur, il délivre deux séries $E_1$ et $E_2$ de signaux d'entrée en impulsion; une série $E_1$ d'impulsions émise avec un angle de phase $\Phi_M$ en avance sur l'instant de passage des pistons au Point Mort Haut (PMH) et une série $E_2$ d'impulsions émises sensiblement à l'instant de passage des pistons au PMH,
- deux portes logiques du type »ET«: une porte 101 qui reçoit, sur une première entrée, la série $E_2$ d'impulsions et, sur une seconde entrée complémentée, le signal de sortie S du discriminateur $D_1$, une porte 102 qui reçoit, sur une première entrée, la série $E_1$ d'impulsions et, sur une seconde entrée, le signal S de sortie du discriminateur $D_1$,
- un moyen 110 permettant de retarder les signaux de sortie de la porte 102; le retard introduit par ce moyen est contrôlé par un signal de commande $V_c$ dont la valeur dépend de la grandeur de paramètres physiques représentatifs du fonctionnement du moteur, notamment, la vitesse de rotation et la charge du moteur; les signaux de sortie $S_3$ élaborés pa le moyen 110, sont retardés de manière à fournir un angle d'avance à l'allumage $\Phi_A$ comme représenté sur la figure 8c,
- une porte logique 103 du type »OU« qui reçoit, sur une première entrée, les signaux $S_3$ et, sur une seconde entrée, la série $E_2$ d'impulsions transférée, sans retard, par la porte 101,
- un générateur d'étincelles 120, dont les sorties H sont connectées aux bougies dumoteur.

Les signaux d'entrée du discriminateur de vitesse angulaire $D_1$ sont les signaux $E_1$ ou $E_2$ fournis par le capteur 100. La période T de ces signaux $E_1$ et $E_2$ est inversement proportionnelle à la vitesse N du moteur et proportionnelle au nombre c de cylindres du moteur. Dans un exemple d'application, la vitesse $N_0$ qui détermine le basculement du signal S et, par voie de conséquence, la commutation du fonctionnement des deux canaux de commande du générateur d'étincelles 120 peut être telle que les vitesses de rotation inférieures à $N_0$ correspondent aux régimes de démarrage et de ralenti du moteur et les vitesses de rotation supérieures à $N_0$ correspondent au régime de croisière du moteur.

La figure 9 représente, sous une forme schématique, une application du discriminateur de vitesse angulaire conforme à l'invention, à un moyen permettant d'éviter qu'un moteur à combustion interne puisse opérer au-delà d'une vitesse angulaire de référence $N_0$ correspondant au seuil de régime de survitesse du moteur.

Sur la figure 9, en se référant, aussi, à la figure 8a, une porte logique 104 du type »ET« est insérée entre la sortie de la porte 103 et l'entrée de déclenchement du générateur d'étincelles 120; cette porte 104 comporte une première entrée reliée à la sortie de la porte 103 et une seconde entrée qui reçoit un signal de contrôle S fourni par un discriminateur de vitesse angulaire $D_2$. La vitesse angulaire de référence $N_0$ de ce discriminateur $D_2$ correspond au seuil du régime de survitesse du moteur et l'entrée de ce discriminateur $D_2$ reçoit des signaux en impulsions synchrones de la vitesse de rotation du moteur, par exemple les signaux $E_1$ décrits précédemment. Pour le cas des régimes des vitesses de rotation inférieures à la valeur de référence $N_0$, les signaux de sortie de la porte 103 sont transférés vers le générateur d'étincelles 120, pour les régimes des vitesses de rotation supérieures à la valeur de référence $N_0$, les signaux de sortie de la porte 103 sont inhibés. Le choix du coefficient d'hystérésis k dépend du type de moteur considéré.

Selon une variante de réalisation, les deux discriminateurs $D_1$ et $D_2$ des figures 8a et 9 peuvent être confondus en un seul discriminateur qui comporte: un premier couple de reconnaisseurs de valeurs $M_1$ et $M_2$ correspondant à la commutation des deux canaux de déclenchement du générateur d'étincelles, et un second couple de reconnaisseurs de valeurs $M_3$ et $M_4$ correspondant à l'inhibition de l'allumage du moteur au delà du seuil de vitesse critique du moteur.

Selon une autre variante de réalisation, le moyen permettant d'inhiber le déclenchement du générateur d'étincelles peut être remplacé par un moyen permettant d'interdire l'injection du carburant dans le moteur.

Dans le futur, les normes d'antipolution relatives aux moteurs DIESEL pour véhicule automobile imposeront de réduire les émissions de $NO_x$ rejetées par les moteurs, actuellement, en service. Un système connu sous la dénomination EGR (Exhaus Gas Recirculation dans la littérature anglo-saxonne) permet, par recirculation des gaz d'échappement, de réduire notablement les quantités de $NO_x$ émises par un moteur DIESEL. Selon ce système, le contrôle des gaz de recirculation opère au-delà d'une vitesse de rotation minimale $N_0$ du moteur et dépend de la quantité de carburant injecté, qui est liée à la position de la pédale d'accélération; dans la pratique il existe deux positions de la pédale d'accélération.

La figure 10 représente, sous une forme schématique, l'application d'un discriminateur selon l'invention, au contrôle d'un système EGR. Sur cette figure, l'élément 100 est un capteur de la vitesse de rotation du moteur qui délivre une impulsion électrique pour chacune des révolutions du moteur; le bloc D comporte un circuit d'horloge 10, un compteur binaire 20, un reconnaisseur 30, identiques à ceux représentés sur la figure 5, et deux bascules mémoires 50 et 60 interconnectées par une porte 70, comme représenté sur la figure 3. L'élément 130 est la pédale d'accélération qui comporte deux détecteurs de proximité qui délivrent deux signaux binaires $C_1$ et $C_2$ correspondant à deux positions

particulières $P_1$ et $P_2$ de la pédale d'accélération; le signal $C_1$ est appliqué à une première entrée d'une porte logique 105 du type »ET« et le signal $C_2$ est appliqué à une première entrée d'une porte logique 106 du type »ET«. Les secondes entrées des portes 105 et 106 sont complémentées et reçoivent le signal S de sortie du discriminateur. Le signal S est au niveau haut lorsque la vitesse de rotation du moteur DIESEL est inférieure à 1470 t/min. et au niveau bas lorsque la vitesse de ce moteur est supérieure à 1530 t/min., entre ces deux vitesses de rotation, le signal S présente un effet d'hystérésis comme expliqué précédemment. Les signaux de sortie des portes 105 et 106, éventuellement après amplification, permettent, par exemple, de commander des dispositifs de commande tels que des électro-vannes.

Les avantages que procure un dispositif selon l'invention apparaissent maintenant clairement: la précision de mesure qui est inhérente aux dispositifs du type numérique est élevée du fait de l'absence de dérive des circuits constituant le dispositif; la vitesse angulaire de référence $N_0$ peut être aisément modifiée, soit manuellement, soit électroniquement à partir d'un signal de commande de nature analogique ou de nature numérique; la valeur du coefficient d'hystérésis k peut être ajusté dans de larges limites; la fabrication du dispositif sous une forme intégrée est facilitée puisque les différents éléments du dispositif peuvent être réalisés par l'association de simples portes logiques.

L'invention telle qu'elle vient d'être décrite n'est pas limitée dans ses caractéristiques et ses applications à la commande des moteurs de traction pour véhicule automobile. En particulier, un discriminateur de vitesse angulaire, selon l'invention, trouve des applications dans le contrôle de la vitesse de déplacement d'un véhicule; dans ce cas, le discriminateur reçoit un signal d'entrée représentatif de la vitesse de rotation des roues du véhicule, différentes valeurs de la vitesse de consigne du véhicule peuvent être affichées et le signal de consigne correspondant est alors appliqué à l'entrée de commande de circuit d'horloge, comme expliqué précédemment. Le discriminateur selon l'invention trouve des applications dans la commande des moteurs électriques et pneumatiques, des moteurs à vapeur, etc. . . et permet, notamment, de détecter si la vitesse de rotation d'un moteur est égale à une vitesse de consigne. D'une manière générale, un tel discriminateur numérique peut avantageusement remplacer tout discriminateur de vitesse angulaire réalisé selon une technique analogique.

## Revendications

1. Discriminateur numérique de vitesse angulaire comprenant, connectés en série, un compteur binaire (20) incrémenté par un signal d'horloge (C) fourni par une horloge (10) et restauré par un signal d'entrée ($S_i$) fourni par un capteur de vitesse (100), un premier décodeur programmable (30) et une première bascule bistable (50) dont la seconde entrée (R) est reliée au signal d'entrée ($S_i$) par l'intermédiaire d'un circuit de retard (80), caractérisé en ce que pour fournir une caractéristique de sortie à cycle d'hystérésis, la sortie du compteur binaire (20) est connectée à un second décodeur (40) dant la sortie est reliée à une seconde bascule bistable (60) et en ce que la seconde entrée (R) de cette seconde bascule est reliée au signal d'entrée ($S_i$), par l'intermédiaire d'une porte ET (70) dont l'entrée de commande est reliée à la sortie ($\overline{Q}$) de la première bascule bistable (50) et en ce que la sortie de la seconde bascule bistable (60) fournit le signal de sortie (S) de ce discriminateur.

2. Discriminateur selon la revendication 1, caractérisé en ce que le compteur binaire (20) comportant n étages, le second décodeur (40) est constitué par l'étage de rang supérieur (n).

3. Discriminateur selon la revendication 1, caractérisé en ce que, seules, les sorties au niveau haut du compteur binaire (20) sont prises en compte par le premier décodeur (30).

4. Discriminateur selon la revendication 1, caractérisé en ce que la sortie du premier décodeur (30) et les sorties au niveau bas du compteur binaire (20) sont prises en compte par le second décodeur (40).

5. Discriminateur selon la revendication 1, caractérisé en ce que l'horloge (10) est constituée par un oscillateur à fréquence variable (figure 7).

6. Discriminateur selon la revendication 5, caractérisé en ce que l'oscillateur à fréquence variable (figure 7) comprend un oscillateur (10a) à fréquence fixe et un diviseur de fréquence programmable (10b).

7. Discriminateur selon la revendication 6, caractérisé en ce que le diviseur de fréquence programmable (10b) est un multiplicateur de fréquence discrèt.

8. Discriminateur selon la revendication 1, caractérisé en ce qu'un diviseur de fréquence est interposé à la sortie du capteur (100) de vitesse de rotation du moteur.

9. Discriminateur selon la revendication 1, caractérisé en ce que le deuxième décodeur (40) connectés aus compteur binaire (20) est un décodeur programmable.

10. Utilisation d'un discriminateur selon l'une des revendications 1 à 9 pour la commande d'un moteur.

## Patentansprüche

1. Digitaler Winkelgeschwindigkeits-Diskriminator mit, in Reihe geschaltet, einem Binärzähler (20), der durch ein von einem Taktgeber (10) geliefertes Taktsignal (C) inkrementiert und durch ein Eingangssignal ($S_i$), das von einem Geschwindigkeitsfühler (100) geliefert wird, rückgesetzt wird, einem ersten programmierbaren Decoder (30) und einer ersten bistabilen Kippschaltung (50), deren zweiter Eingang (R) mit dem Eingangssignal $(S_i)$ über eine Verzögerungsschaltung (80) verbunden ist, dadurch gekennzeichnet, daß zur Schaffung einer Hysteresezyklus-Ausgangscharakteristik der Ausgang des Binärzählers (20) mit einem zweiten Decoder (40) verbunden ist, dessen Ausgang an eine zweite bistabile Kippschaltung (60) angeschlossen ist, daß der zweite Eingang (R) dieser zweiten Kippschaltung an das Eingangssignal $(S_i)$ über eine AND-Schaltung (70) angeschlossen ist, deren Steuereingang mit dem Ausgang $\overline{Q}$ der ersten bistabilen Kippschaltung (50) verbunden ist, und daß der Ausgang der zweiten bistabilen Kippschaltung (60) das Ausgangssignal (S) dieses Diskriminators abgibt.

2. Diskriminator nach Anspruch 1, dadurch gekennzeichnet, daß der Binärzähler (20) n Stufen aufweist und der zweite Decoder (40) durch die Stufe des obersten Ranges (n) gebildet ist.

3. Diskriminator nach Anspruch 1, dadurch gekennzeichnet, daß nur die auf hohem Pegel liegenden Ausgänge des Binärzählers (20) durch den ersten Decoder (30) berücksichtigt werden.

4. Diskriminator nach Anspruch 1, dadurch gekennzeichnet, daß der Ausgang des ersten Decoders (30) und die auf niedrigem Pegel liegenden Ausgänge des Binärzählers (20) durch den zweiten Decoder (40) berücksichtigt werden.

5. Diskriminator nach Anspruch 1, dadurch gekennzeichnet, daß der Taktgeber (10) durch einen Oszillator mit variabler Frequenz gebildet ist (Fig. 7).

6. Diskriminator nach Anspruch 5, dadurch gekennzeichnet, daß der Oszillator mit variabler Frequenz (Fig. 7) einen Oszillator (10a) mit fester Frequenz und einen programmierbaren Frequenzteiler (10b) enthält.

7. Diskriminator nach Anspruch 6, dadurch gekennzeichnet, daß der programmierbare Frequenzteiler (10b) ein diskreter Frequenzmultiplizierer ist.

8. Diskriminator nach Anspruch 1, dadurch gekennzeichnet, daß ein Frequenzteiler am Ausgang des die Rotationsgeschwindigkeit des Motors erfassenden Fühlers (100) eingefügt ist.

9. Diskriminator nach Anspruch 1, dadurch gekennzeichnet, daß der zweite Decoder (40), der mit dem Binärzähler (20) verbunden ist, ein programmierbarer Decoder ist.

10. Verwendung eines Diskriminators nach einem der Ansprüche 1 bis 9 zur Steuerung eines Motors.

## Claims

1. Digital angular velocity discriminator comprising, in series, a binary counter (20) incremented by a clock signal (C) provided by a clock (10) and reset by an input signal $(S_i)$ supplied by a speed sensor (100), a first programmable decoder (30) and a first bistable circuit (50) the second input (R) of which is connected to the input signal $(S_i)$ through a delay circuit (80), characterized in that, in order to achieve a hysteresis cycle-type output characteristic, the output of the binary counter (20) is connected to a second decoder (40) the output of which is connected to a second bistable circuit (60), that the second input (R) of this second circuit is connected to the input signal $(S_i)$ through an AND gate (70) the control input of which is connected to the output $\overline{Q}$ of the first bistable circuit (50) and in that the output of the second bistable circuit (60) provides the output signal (S) of this discriminator.

2. Discriminator in accordance with claim 1, characterized in that the binary counter (20) comprising n stages, the second decoder (40) is formed by the highest order (n) stage.

3. Discriminator in accordance with claim 1, characterized in that only the high level outputs of the binary counter (20) are taken into account by the first decoder (30).

4. Discriminator in accordance with claim 1, characterized in that the output of the first decoder (30) and the low level outputs of the binary counter (20) are taken into account by the second decoder (40).

5. Discriminator in accordance with claim 1, characterized in that the clock (10) is formed by a variable frequency oscillator (figure 7).

6. Discriminator in accordance with claim 5, characterized in that the variable frequency oscillator (figure 7) comprises a fixed frequency oscillator (10a) and a programmable frequency divider (10b).

7. Discriminator in accordance with claim 6, characterized in that the programmable frequency divider (10b) is a discrete frequency multiplier.

8. Discriminator in accordance with claim 1, characterized in that a frequency divider is interposed at the output of the engine rotational speed sensor (100).

9. Discriminator in accordance with claim 1, characterized in that the second decoder (40) connected to the binary counter (20) is a programmable decoder.

10. Use of a discriminator in accordance with any of claims 1 to 9 for control of an engine.

# FIG _ 1

# FIG _ 2

# FIG _ 3

# FIG_4

# FIG_5

# FIG_6

# FIG_7

# FIG_8

(a)

(b)

(c)

# FIG_9

# FIG_10